# EUROPÄISCHE PATENTSCHRIFT

(11) **EP 0 971 833 B1**
(45) Veröffentlichungstag und Bekanntmachung des Hinweises auf die Patenterteilung: **08.05.2002**
(21) Anmeldenummer: 97949943.1
(22) Anmeldetag: 17.11.1997
(51) Int. Cl.: B60T 8/36

(54) **MAGNETVENTIL MIT INTEGRIERTEM RÜCKSCHLAGVENTIL**
ELECTROMAGNETIC VALVE WITH INTEGRATED NON-RETURN VALVE
ELECTROVANNE AVEC CLAPET ANTIRETOUR INTEGRE

(30) Priorität: 13.03.1997 DE 19710353
(43) Veröffentlichungstag der Anmeldung: 19.01.2000
(73) Patentinhaber: ROBERT BOSCH GMBH, 70442 Stuttgart (DE)
(72) Erfinder: SIEGEL, Heinz, D-70435 Stuttgart (DE)
(86) Internationale Anmeldenummer: DE9702698
(87) Internationale Veröffentlichungsnummer: WO9840258

(56) Entgegenhaltungen:
- EP-A- 0 673 815
- WO-A-93/19961
- WO-A-95/13945
- DE-A- 4 030 971

## Beschreibung

### Stand der Technik

Die Erfindung betrifft ein Magnetventil mit integriertem Rückschlagventil mit den Merkmalen des Oberbegriffs des Anspruchs 1. Das Magnetventil ist zur Verwendung als einem Radbremszylinder vorgeschaltetes Bremsdruckaufbauventil für eine schlupfgeregelte, hydraulische Fahrzeugbremsanlage vorgesehen.

Ein derartiges Magnetventil ist aus der EP 0 673 815 A3 bekannt. Dessen Gehäuse ist als topfförmige Hülse mit einem zweiteiligen Boden ausgebildet, und zwar ist in diesen eine Scheibe gefügt, welche zentral eine Durchströmbohrung mit einem oberseitig angeordneten Ventilsitz für einen ankerbetätigten Ventilschließkörper hat. Seitlich neben dieser Durchströmöffnung weist die Scheibe eine zweite Durchströmöffnung mit einem unterseitig angeordneten Ventilsitz für ein Rückschlagventil auf. Die beiden Durchströmöffnungen haben etwa den gleichen Durchmesser. Ein kugel- oder plattenförmiges Schließglied des Rückschlagventils ist in einer Ausdrehung der Scheibe aufgenommen. Außerdem befindet sich in der Ausdrehung ein aus dünnwandigem Blech hergestelltes Halteteil für das Schließglied.

Das bekannte Magnetventil ist relativ teuer, denn sein Gehäuse und die bodenseitige Scheibe müssen in kostenaufwendiger Weise spanend erzeugt werden, das Schließglied des Rückschlagventils und das Halteteil müssen in die Scheibe gefügt, die derart ergänzte Scheibe in das Gehäuse eingebracht und in diesem durch eine Stemmverbindung befestigt werden.

Aus der DE 40 30 971 A1 ist ein Magnetventil bekannt, welches einen rotationssymmetrischen Grundkörper mit einer axialen Durchgangsbohrung aufweist. Auf einer Stirnseite des Grundkörpers ist ein Anker angeordnet, der durch Bestromen einer Spule betätigbar ist. Über einen Ventilstößel, der die Durchgangsbohrung des Grundkörpers durchgreift, betätigt der Anker einen Ventilschließkörper auf der anderen Seite des Grundkörpers. Auf der Seite des Ventilschließkörpers ist eine Hülse am Grundkörper angebracht, in deren Innerem sich der Ventilschließkörper befindet. In die Hülse ist ein scheibenförmiger Ventilsitzträger eingesetzt, der eine Durchströmöffnung mit einem Ventilsitz aufweist, mit dem der Ventilschließkörper des Magnetventils zusammenwirkt. Der scheibenförmige Ventilsitzträger bildet eine Art Boden der Hülse. Unterhalb des Ventilsitzträgers sind außerdem eine Scheibe mit einer Drosselbohrung, eine Siebfilterscheibe und eine Distanzscheibe zwischen der Scheibe mit der Drosselbohrung und der Siebfilterscheibe in der Hülse aufgenommen.

### Vorteile der Erfindung

Das erfindungsgemäße Magnetventil ist besonders wirtschaftlich herstellbar, denn die einteilig mit dem Boden ausgebildete Hülse ist einschließlich der Durchströmöffnungen und Ventilsitz in sehr viel kostengünstiger Weise spanlos zu erzeugen als der entsprechende Gegenstand bei dem gattungsbildenden Magnetventil. Außerdem ist das Fügen des Ventilschließkörpers des Rückschlagventils durch dessen Anordnung außerhalb der topfförmigen Hülse erleichtert. Ferner ergibt sich bei der erfindungsgemäßen Ausbildung des Magnetventils mit mehreren Durchströmöffnungen für das Rückschlagventil der wesentliche Vorteil, daß im Vergleich zum Stand der Technik ein um ein Vielfaches vergrößerter Durchströmquerschnitt zur Verfügung steht. Bei einer vorgesehenen Verwendung des Magnetventils als Bremsdruckaufbauventil ist das Rückschlagventil durch diese Ausgestaltung in Richtung vom Radbremszylinder zum Hauptbremszylinder durchströmbar, öffnet also beim Absenken des Radbremsdrucks bei Beendigung eines Bremsvorgangs. Dies hat den Vorteil, daß die Absenkung des Radbremsdrucks bei Beendigung des Bremsvorganges beschleunigt wird.

### Zeichnung

Die Erfindung wird nachfolgend anhand dreier in der Zeichnung dargestellter Ausführungsbeispiele näher erläutert. Es zeigen
- Figur 1: einen Achsschnitt eines erfindungsgemäßen Magnetventils,
- Figur 2: eine vergrößerte Darstellung einer Einzelheit gemäß Pfeil II in Figur 1,
- Figur 3: eine abgewandelte Ausführungsform des in Figuren 1 und 2 dargestellten Magnetventils in einer Figur 2 entsprechenden Darstellung, und
- Figur 4: eine Abwandlung des in Figur 3 dargestellten Magnetventils.

### Beschreibung der Ausführungsbeispiele

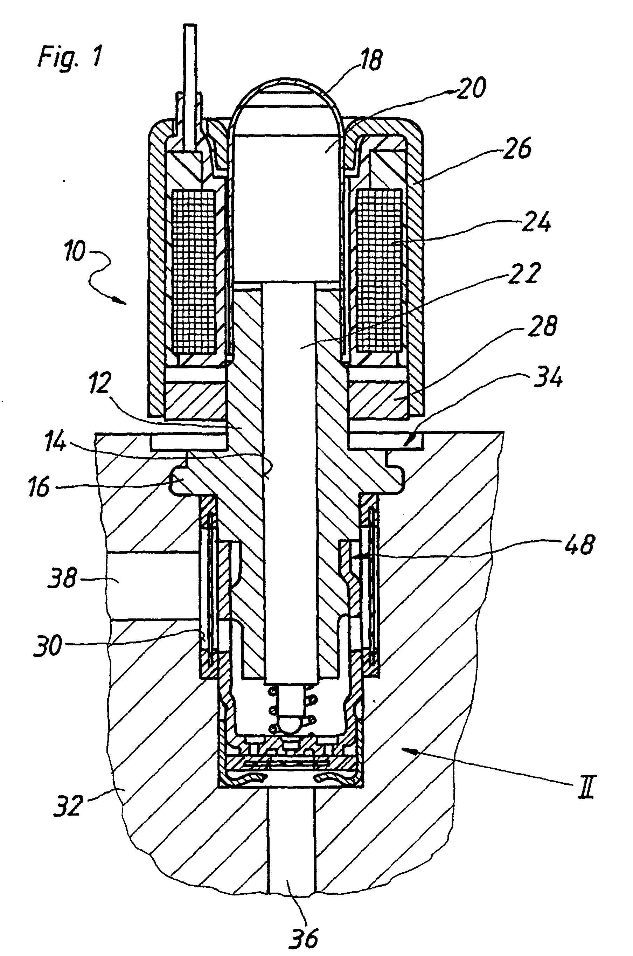

Das in Figur 1 dargestellte, erfindungsgemäße Magnetventil 10 weist einen näherungsweise stabförmigen Grundkörper 12 mit einer axialen Durchgangsbohrung 14 und einem mit ihm einstückigen Ringbund 16 in seinem Mittelbereich auf. An einem Stirnende des Grundkörpers 12 ist ein Ventildom 18 angebracht, in dem ein Anker 20 axial verschiebbar aufgenommen ist. Mit dem Anker 20 ist ein Ventilstößel 22 verbunden, der die Durchgangsbohrung 14 des Grundkörpers 12 durchgreift.

Der Ventildom 18 ist von einer Spule 24 umschlossen, die ihrerseits von einem topfförmigen Joch 26 umgeben ist, in dessen offene Stirnseite ein lochscheibenförmiger Jochboden 28 eingesetzt ist. Zur Betätigung des Magnetventils 10 wird die Spule 24 bestromt und dadurch in an sich bekannter Weise der Anker 20 in axialer Richtung auf den Grundkörper 12 zu bewegt. Mit dem Anker 20 verschiebt sich der Ventilstößel 22.

Der Ringbund 16 des Grundkörpers 12 hat Abstand vom Jochboden 28, der Grundkörper 12 steht axial aus dem die Spule 24 umschließenden Joch 26, 28 vor. Mit dem vorstehenden Abschnitt des Grundkörpers 12 ist das Magnetventil 10 in eine Stufenbohrung 30 eines Hydraulikblocks 32, von dem in Figur 1 nur ein Bruchteil im Bereich des Magnetventils 10 dargestellt ist, eingesetzt. Der Ringbund 16 ist im Hydraulikblock 32 versenkt und das Magnetventil 10 durch Verstemmen (34) am Ringbund 16 im Hydraulikblock 32 befestigt.

Das in Figur 1 dargestellte, erfindungsgemäße Magnetventil 10 ist als Druckaufbauventil einer schlupfgeregelten, im übrigen nicht dargestellten, an sich bekannten Fahrzeugbremsanlage vorgesehen. In den Hydraulikblock 32 sind weitere, nicht dargestellte Bauteile der Fahrzeugbremsanlage wie Magnetventile oder eine Rückförderpumpe eingesetzt und hydraulisch miteinander und mit dem Magnetventil 10 verschaltet. Durch einen axial in die Stufenbohrung 30 mündenden Fluidkanal 36 ist das Magnetventil 10 (mittelbar) an einen nicht dargestellten Hauptbremszylinder angeschlossen, über einen radial in die Stufenbohrung 30 mündenden Fluidkanal 38 ist ein nicht dargestellter Radbremszylinder an das Magnetventil 10 angeschlossen.

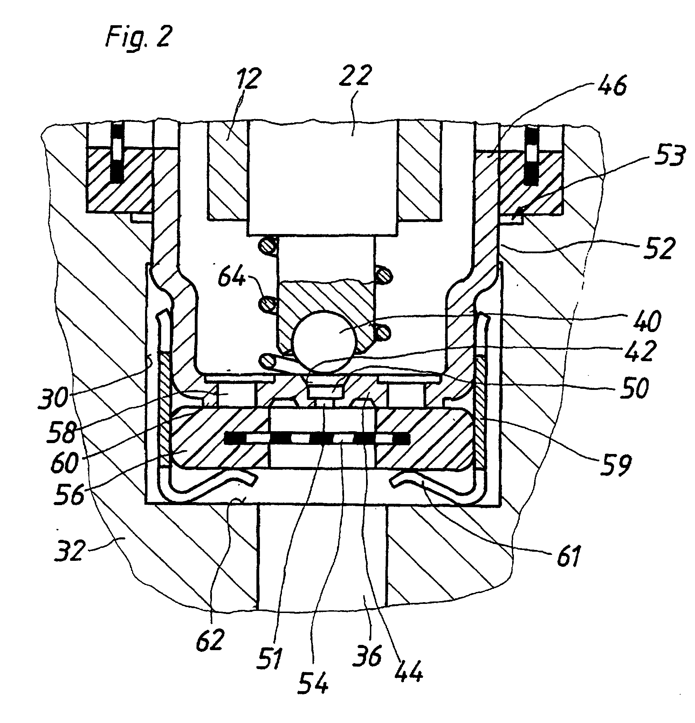

Figur 2 zeigt in vergrößerter Darstellung einen Bereich um einen Ventilsitz des erfindungsgemäßen Magnetventils 10. In ein dem Anker 20 abgewandtes Stimende des Ventilstößels 22 ist eine Ventilkugel 40 als Ventilschließkörper eingepreßt. Sie wirkt zusammen mit einem konischen Ventilsitz 42, der im Boden 44 einer als Blechtiefziehteil ausgebildeten, topfförmigen Hülse 46 angebracht ist. Die topfförmige Hülse 46 ist auf den Grundkörper 12 aufgepreßt und durch Bördeln (Bezugszahl 48 in Figur 1) an mehreren Stellen des Umfangs mit dem Grundkörper 12 verbunden. Eine am Ventilsitz 42 mündende Durchströmöffnung 50 des Magnetventils 10 in der Mitte des Bodens 44 der topfförmigen Hülse 46 weist eine Verjüngung als Drosselstelle 51 auf, die für die Blockierschutzregelung notwendig oder zumindest vorteilhaft ist. Diese Drosselstelle 51 ist fahrzeugspezifisch, also auf das Fahrzeug abgestimmt, in dem das Magnetventil 10 eingesetzt werden soll.

Eine Abdichtung zwischen den den Ventileinlaß und -auslaß bildenden Fluidkanälen 36, 38 erfolgt an einem nach innen stehenden, flachen Radialbund 52 der Sackbohrung 30 des Hydraulikblocks 32, an dem die topfförmige Hülse 46 des in die Sackbohrung 30 eingesetzten Magnetventils 10 dichtend anliegt. Der Radialbund 52 ist durch Umformen des Werkstoffs des Hydraulikblocks 32 (Bezugszahl 53), insbesondere durch einen Prägevorgang gegen einen nicht dargestellten, formgenauen Stempel, hergestellt. Dies hat den Vorteil, daß die Sackbohrung 30 ohne Hinterschnitt herstellbar ist, daß der Durchmesser des Radialbundes 52 sehr genau mit geringer Toleranz fertigbar ist, und daß er eine kurze axiale Länge hat, die die Kräfte beim Einpressen der topfförmigen Hülse 46 niedrig hält.

Auf einer Außenseite des Bodens 44 der topfförmigen Hülse 46 ist ein Filtersieb 54 aus Drahtgewebe oder Kunststoffgewebe (Maschendraht) angeordnet, deren Rand mit einem kreisringförmigen Kunststoffkörper umspritzt ist. Dieser Kunststoffkörper bildet einen Ventilschließkörper 56 eines in das erfindungsgemäße Magnetventil 10 integrierten Rückschlagventils. Dieser Ventilschließkörper 56 wirkt zusammen mit mehreren Durchströmöffnungen 58, die auf einem gedachten Kreis um die Durchströmöffnung 50 des Magnetventils 10 herum im Boden 44 der topfförmigen Hülse 46 angebracht sind. Um die Dichtfunktion des Rückschlagventils zu verbessern, weisen die Durchströmöffnungen 58 kreisförmige, in Richtung des Ventilschließkörpers 56 abstehende Krägen 60 als Ventilsitze auf, an denen der Ventilschließkörper 56 bei geschlossenem Rückschlagventil dichtend anliegt.

Auf die topfförmige Hülse 46 ist eine rohrförmige Hülse 59 aufgepreßt, die über den Boden 44 der topfförmigen Hülse 46 in axialer Richtung übersteht und den Ventilschließkörper 56 des Rückschlagventils positioniert. Die rohrförmige Hülse 59 weist mit ihr einstückige Federzungen 61 auf, die äquidistant über den Umfang verteilt angeordnet und nach innen auf eine der topfförmigen Hülse 46 abgewandte Seite des Ventilschließkörpers 56 des Rückschlagventils umgebogen sind. Die Federzungen 61 drücken den Ventilschließkörper 56 des Rückschlagventils gegen die die Ventilsitze des Rückschlagventils bildenden Krägen 60. Das Rückschlagventil ist federbelastet. Die rohrförmige Hülse 59 sitzt mit ihren Federzungen 61 auf einem Grund 62 der Stufenbohrung 30 auf, so daß es einer besonderen Befestigung der rohrförmigen Hülse 59 auf der topfförmigen Hülse 46 nicht bedarf.

Die Funktion des erfindungsgemäßen Magnetventil 10 ist folgende:

Bei stromloser Spule 24 drückt eine Ventilfeder 64, die in die topfförmige Hülse 46 eingesetzt ist, in axialer Richtung gegen den Ventilstößel 22 und hebt den Ventilschließkörper 40 des Magnetventils 10 von seinem Ventilsitz 42 ab, das Magnetventil 10 ist geöffnet. Wird die Spule 24 bestromt, wird der Anker 20 axial gegen die Kraft der Ventilfeder 64 in Richtung des Grundkörpers 12 gezogen, bis der Ventilschließkörper 40 auf seinem Ventilsitz 42 aufsitzt und das Magnetventil 10 schließt.

Herrscht im Innern der topfförmigen Hülse 46 ein Überdruck in Bezug auf den Druck auf der Außenseite ihres Bodens 44, d. h. bei der Verwendung des erfindungsgemäßen Magnetventils 10 als Druckaufbauventil einer blockierschutzgeregelten Fahrzeugbremsanlage am radbremszylinderseitigen Fluidkanal 38 ein höherer Druck als am hauptbremszylinderseitigen Fluidkanal 36, hebt dieser Überdruck den Ventilschließkörper 56 des Rückschlagventils von dessen Ventilsitzen 60 ab, so daß Bremsflüssigkeit durch die Durchströmöffnungen 58 des Rückschlagventils unabhängig von der Stellung des Magnetventils 10 strömen kann. Dadurch stellt das erfindungsgemäße Magnetventil 10 einen vielfach größeren Strömungsquerschnitt für die als Rückströmung bezeichnete Strömung vom Radbremszylinder zum Hauptbremszylinder als die mit der Drossel 51 versehene Durchströmöffnung des eigentlichen Magnetventils zur Verfügung. Dies ist vorteilhaft für einen schnellen Radbremsdruckabbau bei Beendigung eines Bremsvorgangs.

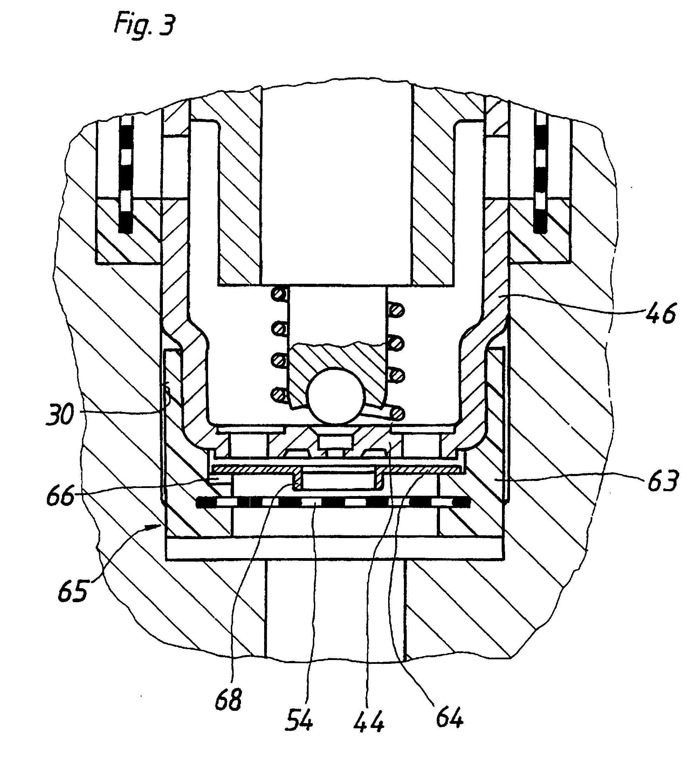

Figur 3 zeigt ein gegenüber Figur 2 abgewandeltes Ausführungsbeispiel eines erfindungsgemäßen Magnetventils 10.

Bei diesem fehlt die rohrförmige Hülse 59, das Filtersieb 54 ist mit dem es fassenden, ringförmigen Kunststoffteil 63 fest an der topfförmigen Hülse 46 angebracht. Als Ventilschließkörper 64 des Rückschlagventils weist das in Figur 3 dargestellte, erfindungsgemäße Magnetventil eine Blechscheibe auf, die um einen Ventilhub in axialer Richtung vom Boden 44 der topfförmigen Hülse 46 abhebbar in das Kunststoffteil 63 eingelegt ist. Das Rückschlagventil des in Figur 3 dargestellten Magnetventils ist federlos.

Das Kunststoffteil 63 ist mit einer Presspassung 65 in die Sackbohrung 30 eingesetzt, die das Kunststoffteil 63 an die topfförmige Hülse 46 andrückt und dadurch eine Abdichtung sowohl zwischen der Sackbohrung 30 und dem Kunststoffteil 63 als auch zwischen dem Kunststoffteil 63 und der topfförmigen Hülse 46 sicherstellt und zudem das Kunststoffteil 63 sicher fixiert.

An mehreren Stellen des Umfangs sind in dem Kunststoffteil 63 außen um einen Rand des Ventilschließkörpers 64 des Rückschlagventils herumführende Durchlässe 66 angebracht, die eine Umströmung des Ventilschließkörpers 64 bei offenen Rückschlagventil ermöglichen.

Der als Lochscheibe ausgebildete Ventilschließkörper 64 des Rückschlagventils weist einen niedrigen, hohlzylindrischen Kragen 68 an seinem Lochrand auf, der vom Boden 44 der topfförmigen Hülse 46 wegsteht. Dieser Kragen 68 dient der guten Vereinzelbarkeit von Ventilschließkörpern 64 bei der automatisierten Montage des erfindungsgemäßen Magnetventils 10.

Im übrigen ist das in Figur 3 dargestellte Magnetventil gleich aufgebaut und funktioniert in gleicher Weise wie das in Figuren 1 und 2 dargestellte Magnetventil 10. Zur Vermeidung von Wiederholungen wird insoweit auf die entsprechenden Ausführungen verwiesen.

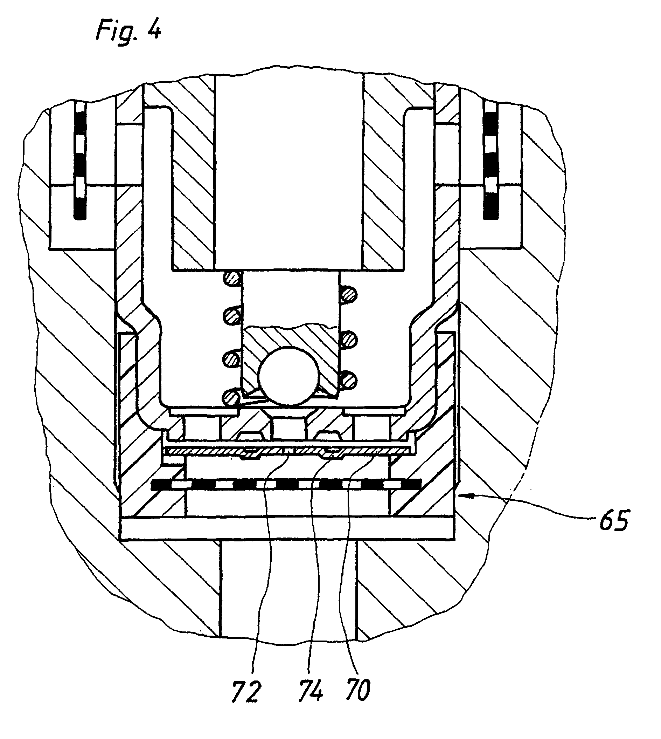

In Figur 4 ist eine Einzelheit einer weiteren, gegenüber Figur 3 abgewandelten Ausgestaltung des erfindungsgemäßen Magnetventils dargestellt. Dieses weist ebenfalls einen scheibenförmigen Ventilschließkörper 70 des Rückschlagventil auf. Dieser weist ein Loch kleinen Durchmessers als Drossel 72 für das Magnetventil in seiner Mitte auf. Die Drossel 51 (Figur 2) im Boden 44 der topfförmigen Hülse 46 entfällt dadurch, was deren Herstellung vereinfacht.

Zur Verbesserung der Vereinzelung einer Vielzahl von Ventilschließkörpern 70 weisen diese eingeprägte Füße 74 als Abstandshalter auf. Im übrigen ist das in Figur 4 dargestellte Magnetventil ebenso aufgebaut wie das in Figur 3 dargestellte Magnetventil und funktioniert in gleicher Weise. Zur Vermeidung von Wiederholungen wird auf die entsprechenden Ausführungen zu Figuren 1 bis 3 verwiesen.

## Patentansprüche

1. Magnetventil (10) mit einem Anker (20) zur Betätigung eines Ventilschließkörpers (40), mit einer Spule (24) zur Betätigung des Ankers (20), mit einer topfförmigen Hülse (46), in deren Innerem sich der Ventilschließkörper (40) befindet und in deren Boden (44) eine einen Ventilsitz (42) für den Ventilschließkörper (40) aufweisende Durchströmöffnung (50) angebracht ist, sowie mit mindestens einer am Boden (44) der topfförmigen Hülse (46) seitlich der Durchströmöffnung (50) für den ankerbetätigten Ventilschließkörper (40) angeordneten weiteren Durchströmöffnung (58) für ein Rückschlagventil (60, 56; 64; 70) mit einem Ventilschließkörper (56; 64; 70) zum Verschließen der mindestens einen weiteren Durchströmöffnung (58),
**dadurch gekennzeichnet,**
**daß** die topfförmige Hülse (46) ein spanlos hergestelltes Blechformteil ist, dessen Boden (44) mehrere auf einem Kreis um die Durchströmöffnung (50) für den ankerbetätigten Ventilschließkörper (40) angeordnete Durchströmöffnungen (58) für das Rückschlagventil (60, 56; 64; 70) aufweist, und daß der Ventilschließkörper (56; 64; 70) des Rückschlagventils (60, 56; 64; 70) ringscheibenförmig ausgebildet ist, sich entlang dem Boden (44) auf dessen von dem ankerbetätigten Ventilschließkörper (40) abgewandten Seite der topfförmigen Hülse (46) erstreckt und von einem außenumfangsseitig auf der topfförmigen Hülse (46) angebrachten Bauteil (59; 63) gehalten ist.

2. Magnetventil nach Anspruch 1, **dadurch gekennzeichnet, daß** die Durchströmöffnungen (58) für das Rückschlagventil (60, 56; 64; 70) einen in Richtung des Ventilschließkörpers (59) des Rückschlagventils abstehenden Kragen (60) als Ventilsitz aufweisen.

3. Magnetventil nach Anspruch 1, **dadurch gekennzeichnet, daß** der Ventilschließkörper (64; 70) des Rückschlagventils (60, 64; 70) ein Blechteil ist.

4. Magnetventil nach Anspruch 3, **dadurch gekennzeichnet, daß** der Ventilschließkörper (64; 70) des Rückschlagventils (60, 64; 70) Abstandshalter (68; 74) aufweist.

5. Magnetventil nach Anspruch 1, **dadurch gekennzeichnet, daß** der Ventilschließkörper (56) des Rückschlagventils (60, 56) als Rahmen eines Filtersiebs (54) ausgebildet ist.

6. Magnetventil nach Anspruch 1, **dadurch gekennzeichnet, daß** das Rückschlagventil (60, 56) ein Schließfederelement (61) aufweist, welches den Ventilschließkörper (56) des Rückschlagventils gegen den Boden (44) der topfförmigen Hülse (46) drückt.

7. Magnetventil nach Anspruch 6, **dadurch gekennzeichnet, daß** an der topfförmigen Hülse (46) eine rohrförmige Hülse (59) angebracht ist, die nach innen stehende Federzungen (61) als Schließfederelemente für das Rückschlagventil (60, 56) aufweist.

8. Magnetventil nach Anspruch 1, **dadurch gekennzeichnet, daß** das Magnetventil (10) einen stabförmigen Grundkörper (12) mit einer axialen Durchgangsbohrung (14) aufweist, die von einem Ventilstößel (22) durchgriffen wird, der den Anker (20), der sich auf einer Stirnseite des Grundkörpers (12) befindet, mit dem Ventilschließkörper (40) auf der anderen Stirnseite des Grundkörpers (12) verbindet, und daß die topfförmige Hülse (46) an der dem Ventilschließkörper (40) zugewandten Seite des Grundkörpers (12) angebracht ist.

9. Magnetventil nach Anspruch 1, **dadurch gekennzeichnet, daß** die topfförmige Hülse (46) eine Preßpassung zur Abdichtung in einer Sackbohrung (30) eines Hydraulikblocks (32) aufweist, in die das Magnetventil (10) einsetzbar ist.

10. Magnetventil nach Anspruch 9, **dadurch gekennzeichnet, daß** die Sackbohrung (30) einen Radialbund (52) zur Abdichtung an der topfförmigen Hülse (46) aufweist, der durch Umformen des Werkstoffs des Hydraulikblocks (32) hergestellt ist.

11. Magnetventil nach Anspruch 1, **dadurch gekennzeichnet, daß** die Durchströmöffnung (50) für den ankerbetätigten Ventilschließkörper (40) im Boden (44) der topfförmigen Hülse (46) als Drosselstelle (51) ausgebildet ist.

12. Magnetventil nach Anspruch 1, **dadurch gekennzeichnet, daß** der Ventilschließkörper (70) des Rückschlagventils (60, 70) eine Drossel (72) für das Magnetventil (10) aufweist.

13. Magnetventil nach Anspruch 1, **dadurch gekennzeichnet, daß** der Ventilschließkörper (64; 70) des Rückschlagventils (60, 64; 70) mit Spiel in axialer Richtung in einem Kunststoffteil (63) gekammert ist, welches an der topfförmigen Hülse (46) angebracht ist.

14. Magnetventil nach Anspruch 13, **dadurch gekennzeichnet, daß** das Kunststoffteil (63) Durchlässe (66) aufweist, die ein Umströmen des Ventilschließkörpers (64; 70) des Rückschlagventils (60, 64; 70) ermöglichen, wenn dieser von den Ventilsitzen (60) abgehoben ist.

15. Magnetventil nach Anspruch 12, **dadurch gekennzeichnet, daß** das Kunststoffteil (63) eine Preßpassung zur Abdichtung in der Sackbohrung (30) des Hydraulikblock (32) aufweist, in die das Magnetventil (10) einsetzbar ist.

## Claims

1. Solenoid valve (10) with an armature (20) for actuating a valve-closing body (40), with a coil (24) for actuating the armature (20), with a can-shaped sleeve (46), inside which the valve-closing body (40) is located and in the bottom (44) of which is made a throughflow orifice (50) having a valve seat (42) for the valve-closing body (40), and also with at least one further throughflow orifice (58) arranged on the bottom (44) of the can-shaped sleeve (46) laterally of the throughflow orifice (50) for the armature-actuated valve-closing body (40) and intended for a non-return valve (60, 56; 64; 70) having a valve-closing body (56; 64; 70) for closing the at least one further throughflow orifice (58), **characterized in that** the can-shaped sleeve (46) is a sheet-metal moulding produced in a non-cutting manner, the bottom (44) of which has a plurality of throughflow orifices (58) for the non-return valve (60, 56; 64, 70) which are arranged on a circle around the throughflow orifice (50) for the armature-actuated valve-closing body (40), and **in that** the valve-closing body (56; 64; 70) of the non-return valve (60, 56; 64; 70) is designed in the form of an annular disc, extends along the bottom (44) on its side of the can-shaped sleeve (46) facing away from the armature-actuated valve-closing body (40) and is held by a structural part (59; 63) mounted on the outer circumference of the can-shaped sleeve (46).

2. Solenoid valve according to Claim 1, **characterized in that** the throughflow orifices (58) for the non-return valve (60, 56; 64; 70) have, as a valve seat, a collar (60) projecting in the direction of the valve-closing body (56) of the non-return valve.

3. Solenoid valve according to Claim 1, **characterized in that** the valve-closing body (64; 70) of the non-return valve (60, 64; 70) is a sheet-metal part.

4. Solenoid valve according to Claim 3, **characterized in that** the valve-closing body (64; 70) of the non-return valve (60, 64; 70) has spacers (68; 74).

5. Solenoid valve according to Claim 1, **characterized in that** the valve-closing body (56) of the non-return valve (60, 56) is designed as the frame of a filter screen (54).

6. Solenoid valve according to Claim 1, **characterized in that** the non-return valve (60, 56) has a closing-spring element (61) which presses the valve-closing body (56) of the non-return valve against the bottom (44) of the can-shaped sleeve (46).

7. Solenoid valve according to Claim 6, **characterized in that** the can-shaped sleeve (46) has mounted on it a tubular sleeve (59) which has inwardly projecting spring tongues (61) as closing-spring elements for the non-return valve (60, 56).

8. Solenoid valve according to Claim 1, **characterized in that** the solenoid valve (10) has a bar-shaped basic body (12) with an axial passage bore (14), through which passes a valve tappet (22) which connects the armature (20), located on one end face of the basic body (12), to the valve-closing body (40) on the other end face of the basic body (12), and **in that** the can-shaped sleeve (46) is mounted on that side of the basic body (12) which faces the valve-closing body (40).

9. Solenoid valve according to Claim 1, **characterized in that** the can-shaped sleeve (46) has a press fit for sealing off in a blind bore (30) of a hydraulic block (32), the solenoid valve (10) being capable of being inserted into said blind bore.

10. Solenoid valve according to Claim 9, **characterized in that** the blind bore (30) has a radial flange (52) for sealing off on the can-shaped sleeve (46), said radial flange being produced by forming the material of the hydraulic block (32).

11. Solenoid valve according to Claim 1, **characterized in that** the throughflow orifice (50) for the armature-actuated valve-closing body (40) is formed as a throttle point (51) in the bottom (44) of the can-shaped sleeve (46).

12. Solenoid valve according to Claim 1, **characterized in that** the valve-closing body (70) of the non-return valve (60, 70) has a throttle (72) for the solenoid valve (10).

13. Solenoid valve according to Claim 1, **characterized in that** the valve-closing body (64; 70) of the non-return valve (60, 64; 70) is chambered, with play in the axial direction, in a plastic part (63) which is mounted on the can-shaped sleeve (46).

14. Solenoid valve according to Claim 13, **characterized in that** the plastic part (63) has passages (66) which allow a flow to pass around the valve-closing body (64; 70) of the non-return valve (60, 64; 70) when said valve-closing body is lifted off from the valve seats (60).

15. Solenoid valve according to Claim 13, **characterized in that** the plastic part (63) has a press fit for sealing off in the blind bore (30) of the hydraulic block (32), the solenoid valve (10) being capable of being inserted into said blind bore.

## Revendications

1. Electrovanne (10) comportant un induit (20) pour actionner un organe d'obturation (40), une bobine (24) pour actionner l'induit (20), un manchon (46) en forme de pot recevant à l'intérieur l'organe d'obturation (40) et dont le fond (44) comporte un orifice de passage (50) avec un siège de soupape (42) pour l'organe d'obturation de soupape (40), ainsi qu'au moins un autre orifice de passage (58) prévu dans le fond (44) du manchon (46) en forme de pot, à côté de l'orifice de passage (50) pour l'organe d'obturation de soupape (40) actionné par l'induit, cet orifice de passage (58) étant prévu pour un clapet anti-retour (60, 56; 64 ; 70) avec un organe d'obturation (56; 64; 70) pour fermer au moins cet autre orifice de passage (58),
**caractérisée en ce que**
le manchon (46) en forme de pot est une pièce en tôle mise en forme sans usinage par enlèvement de copeaux, dont le fond (44) comporte plusieurs orifices de passage (58) pour le clapet anti-retour (60, 56; 64, 70), ces orifices étant répartis sur un cercle autour de l'orifice de passage (50) de l'organe d'obturation (40) actionné par l'induit, et
l'organe d'obturation (56; 64; 70) du clapet anti-retour (60, 56 ; 64; 70) étant de forme annulaire et s'étend le long du fond (44) sur le côté du manchon (46) en forme de pot, opposé à l'organe d'obturation (44) actionné par l'induit, et cet organe d'obturation (56 ; 64 ; 70) est tenu par une pièce (59, 63) montée sur le côté extérieur périphérique du manchon (46) en forme de pot.

2. Electrovanne selon la revendication 1,
**caractérisée en ce que**
les orifices de passage (58) du clapet anti-retour (64, 56; 64; 70) comportent comme siège de soupape, une collerette (60) en saillie en direction de l'organe d'obturation (56) du clapet anti-retour.

3. Electrovanne selon la revendication 1,
**caractérisée en ce que**
l'organe d'obturation (64; 70) du clapet anti-retour (60, 64; 70) est une pièce en tôle.

4. Electrovanne selon la revendication 3,
**caractérisée en ce que**
l'organe d'obturation (64 ; 70) du clapet anti-retour (60, 64; 70) comprend un organe d'écartement (68; 74).

5. Electrovanne selon la revendication 1,
**caractérisée en ce que**
l'organe d'obturation (56) du clapet anti-retour (60, 56) est réalisé par le cadre d'un tamis de filtre (54).

6. Electrovanne selon la revendication 1,
**caractérisée en ce que**
le clapet anti-retour (60, 56) comporte un élément de fermeture à ressort (61) qui presse l'organe d'obturation (56) du clapet anti-retour contre le fond (44) du manchon (46) en forme de pot.

7. Electrovanne selon la revendication 6,
**caractérisée en ce que**
le manchon en forme de pot (46) comporte un manchon tubulaire (59) muni de languettes élastiques (61) tournées vers l'intérieur et constituant les éléments élastiques de fermeture du clapet anti-retour (60, 56).

8. Electrovanne selon la revendication 1,
**caractérisée en ce que**
l'électrovanne (10) se compose d'un corps (12) en forme de tige avec un perçage traversant axial (14) traversé par un poussoir de soupape (22) reliant l'induit (20) prévu sur une face frontale du corps de base (12) à l'organe d'obturation (40) au niveau de l'autre face frontale du corps de base (12), et
le manchon (46) en forme de pot est monté sur le côté du corps de base (12) tourné vers l'organe d'obturation (40).

9. Electrovanne selon la revendication 1,
**caractérisée en ce que**
le manchon (46) en forme de pot comporte un ajustage pressé pour assurer l'étanchéité dans un perçage borgne (30) d'un bloc hydraulique (32) dans lequel se monte l'électrovanne (10).

10. Electrovanne selon la revendication 9,
**caractérisée en ce que**
le perçage borgne (30) comporte une collerette radiale (52) pour assurer l'étanchéité contre le manchon (46) en forme de pot, cette collerette étant réalisée par transformation de la matière du bloc hydraulique (32).

11. Electrovanne selon la revendication 1,
**caractérisée en ce que**
l'orifice de passage (50) pour l'organe d'obturation (40) commandé par l'induit est réalisé dans le fond (44) du manchon (46) en forme de pot comme point d'étranglement (51).

12. Electrovanne selon la revendication 1,
**caractérisée en ce que**
l'organe d'obturation (70) du clapet anti-retour (60, 70) comporte un moyen d'étranglement (72) pour l'électrovanne (10).

13. Electrovanne selon la revendication 1,
**caractérisée en ce que**
l'organe d'obturation (64; 70) du clapet anti-retour (60, 64 ; 70) est emprisonné avec du jeu dans la direction axiale, dans une pièce en matière plastique (63) elle-même montée sur le manchon (46) en forme de pot.

14. Electrovanne selon la revendication 13,
**caractérisée en ce que**
la pièce en matière plastique (63) comporte des passages (66) permettant un contournement de l'organe d'obturation (64 ; 70) du clapet anti-retour (60, 64; 70) lorsque celui-ci est soulevé par rapport au siège (60).

15. Electrovanne selon la revendication 12,
**caractérisée en ce que**
la pièce en matière plastique (63) comporte un ajustage pressé pour assurer l'étanchéité dans le perçage borgne (30) du bloc hydraulique (32) recevant l'électrovanne (10).
